# EUROPEAN PATENT APPLICATION

(11) **EP 1 598 588 A1**
(43) Date of publication of application: **23.11.2005**
(21) Application number: 05010642.6
(22) Date of filing: 17.05.2005
(51) Int. Cl.: F16L 55/045, F24D 3/08, F24D 19/10, F16K 47/02

(54) **Bi-thermal boiler with anti-'water hammer' arrangement in the bypass circuit**

(30) Priority: 21.05.2004 IT MI20041019
(71) Applicant: Scanferla, Giorgio, 36061 Bassano del Grappa (VI) (IT)
(72) Inventor: Scanferla, Giorgio, 36061 Bassano del Grappa (VI) (IT)
(74) Representative: Faraggiana, Vittorio

(57) **Abstract**

A boiler includes a burner (11) that heats water circulated by a pump (13) and transiting in a primary exchanger (12). Switching means switch water circulation on command between an external heating circuit (15) and an internal sanitary hot water production circuit (16). A bypass circuit is arranged parallel to the external heating circuit and includes a bypass valve (19) that when necessary opens to allow normal bypass flow. The bypass circuit also includes a second valve (25) allowing passage in the bypass circuit of a flow directed oppositely to the normal bypass flow. This was found to avoid the 'water hammer' due to switching between the heating circuit and the sanitary water production circuit.

## Description

This invention relates to a bi-thermal boiler with improved bypass circuit.

In so-called 'by-thermal' boilers, that is to say that supply both the heating function and hot sanitary water production, switching from one function to the other is normally secured by means of a 3-way valve that switches the water of the primary circuit between the heating circuit and the hot sanitary water production circuit.

The valve can be installed either on the delivery circuit (i.e. from the primary exchanger to the boiler outlet) or on the return circuit (i.e. from return into the boiler to the circulation pump).

In both cases it is preferred that the valves be realized in such a manner that the discharge head of the circulation pump tends to hold the cutoff thereof closed, thrust toward its own seat and thus ensuring good seal. The contrary situation, i.e. with pressure exerted by the pump tending to open the closed cutoff, would require special contrivances to ensure seal with resulting greater cost and useless complication.

Even the first solution however presents some problems. Indeed, when the valve control moves the cutoff(s) from one seat to the other to switch, it must mainly overcome the friction on the valve stem of the seal members (normally O-rings). This friction causes the play between the various components of the valve control to be all recovered in the direction of compression if thrust or of traction if in the pull direction. While the valve switches, the primary fluid circulates in both circuits of the boiler to cause thrust on the cutoff(s) proportional to the throttling that it is creating on their passage seat.

When the cutoff is almost ready to close a passage, the pressure drop on that seat can be such as to create a thrust on the cutoff higher than the friction resistance on the stem and the cutoff can be thrust onto the seat by the fluid to anticipate the movement of the valve control because all the play is recovered instantly in the opposite direction.

A movement of this kind is out of control and takes place very rapidly so that the phenomenon called 'water hammer' can easily occur, that is instantaneous overpressure producing an annoying noise.

Since we known from the 'water hammer' theory that a fast closing gives rise to a very high over-pressure only if it occurs in a time t<2L/c where L is the length of the blocked circuit and c is the sound propagation velocity in that fluid, it is clear that the phenomenon can occur much more easily when one goes to close the passage to the heating circuit where the duct is very long than when the internal sanitary production circuit which is very reduced in length closes.

In the prior art to prevent this shortcoming it has been proposed for example to stop the pump during switching. But this requires a change in the boiler control system.

The general purpose of this invention is to remedy the above mentioned shortcomings by making available a bi-thermal boiler with an improvement that in a simple and economical manner prevents 'water hammer' upon switching between the heating circuit and the sanitary hot water production circuit.

In view of this purpose it was sought to provide in accordance with this invention a boiler including a burner that heats water circulated by a pump and transiting in a primary exchanger and switching means that switch water circulation on command between an external heating circuit and an internal sanitary hot water production circuit and a bypass circuit arranged parallel to the external heating circuit and including a bypass valve that when necessary opens to allow normal bypass flow and characterized in that the bypass circuit also includes a second valve allowing passage in the bypass circuit of a flow directed oppositely to the normal bypass flow.

To clarify the explanation of the innovative principles of this invention and its advantages compared with the prior art there is described below with the aid of the annexed drawings a possible embodiment thereof by way of non-limiting example applying said principles. In the drawings:
FIG 1 shows a diagrammatic view of a boiler in accordance with this invention , and
FIG 2 shows an enlarged diagrammatic view of a detail of the boiler of FIG 1.

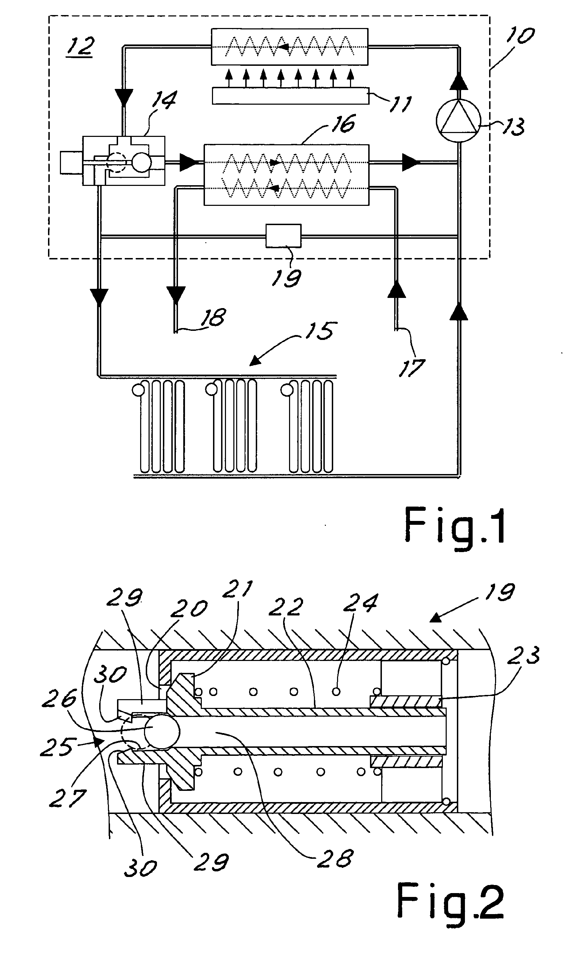

With reference to the figures, FIG 1 shows diagrammatically a boiler designated as a whole by reference number 10 applying the principles of this invention.

The boiler 10 includes a burner 11 that heats the water transiting in a primary exchanger 12 circulated by a circulation pump 13.

On command, means of communication 14 and in particular a 3-valve, switch water circulation between an external heating circuit 15 and a sanitary hot water production circuit. The hot water production circuit includes a secondary exchanger 16 that heats the water coming from a source 17 (usually the water mains) and directed to the users (not shown) through an outlet 18. The secondary exchanger has a first branch fed by the hot water heated by the primary exchanger and a second branch traversed by the mains water directed to the users.

The boiler also includes a prior art control unit (not shown) for managing its operation in accordance with that which is readily imaginable to those skilled in the art. Operation of such a boiler is readily imaginable to those skilled in the art and therefore not further described nor shown. Basically, in accordance with the normal operation for this type of boiler, when a user calls back water from the outlet 18 a sensor (not shown) detects this and switches the valve 14 to feed the secondary exchanger with the water heated by the exchanger 12. When withdrawal ceases, the heating circuit 15 is again fed with the circulation of hot water.

The boiler also includes a bypass circuit 19 allowing at least a minimum circulation of water in the primary exchanger even when a certain number of circuit heating members 15 are closed.

In more economical boilers the bypass consists of a duct with a simple narrowing. This type of bypass, allowing continuous recirculation during operation of the boiler, reduces its maximum power available so that in better-quality boilers an automatic valve with a spring-loaded cutoff that opens only if the circulation in the heating circuit is insufficient to ensure correct operation of the boiler is used.

In accordance with the prior art with a by-bass of the latter type, circulation can take place only from the delivery duct towards the pump and not vice versa.

FIG 2 shows in greater detail the bypass valve 19 in the boiler 10 realized in accordance with this invention.

This valve includes a port 20 that is closed by a cutoff 21 guided with its own stem 22 in a seat 23 and thrust to close by a spring 24. The spring will be chosen to have automatic opening of the valve when circulation in the heating circuit is no longer considered sufficient to ensure correct operation of the boiler.

The bypass circuit also includes another valve 25 that opens when there is a minimum flow in the direction opposite normal to open the bypass valve.

Advantageously the valve 25 is installed on the same cutoff 21 realized axially pierced. In particular in the preferred realization the valve 25 is realized with a cutoff advantageously realized with a ball 26 that is received in a seat 27 on the face of the cutoff towards the arrival side of the normal bypass flow to be free to run axially to the cutoff 21 between a position closing the central passage 28 (shown in solid lines in FIG 2) and an opposite position opening the passage (shown in broken lines in FIG 2). The central passage 28 extends advantageously the entire length of the stem 22 so as to open at its free end. A bypass valve thus realized can be sized like a normal bypass valve while limiting the modifications to the boiler circuit.

Again advantageously the seat 27 is realized with some elastic fingers 29 (3 in number for example) extending parallel and symmetrically around the sliding axis of the cutoff to terminate each with a lock tooth 30 that cooperates with the other teeth of the other elastic fingers to form an end-of-travel stop for the ball in the open position. With such a construction it is easy to mold the cutoff in one piece of plastic with the stem and the elastic fingers and then install the ball by push-snapping into its seat. A change of this type adds a very small cost to the bypass valve.

During normal operation of the boiler, the ball 26 is held pressed against the hole 28 by the discharge head of the pump 13 so that it is as though the hole were not there. The bypass valve then operates normally with the cutoff opening when, because of closing of members on the heating circuit, the pump head exceeds in the bypass circuit the figure preset with the spring 24.

But when the 3-way valve 14 closes the heating circuit to switch onto the sanitary water production circuit, the ball 26 is easily moved into opening by the suck caused by the fluid in the delivery duct and a reverse flow can be had (from right to left in the figure) through the bypass circuit. A bypass of this kind completely eliminates the 'water hammer' problem because when the valve 14 closes the seat of the heating circuit the fluid of this circuit does not shut suddenly but can continue to circulate thanks to the circulation in the opposite direction that is created in the bypass duct.

It is now clear that the preset purposes have been achieved.

Naturally the above description of an embodiment applying the innovative principles of this invention is given by way of non-limiting example of said principles within the scope of the exclusive right claimed here. For example, the valve for switching between circuits can be arranged on the return instead of the delivery. In addition, the boiler can include all those known accessories and devices for this type of apparatus such as for example sanitary hot water accumulation tanks, temperature sensors, safety thermostats et cetera.

## Claims

1. Boiler including a burner (11) that heats water circulated by a pump (13) and transiting in a primary exchanger (12) and switching means that switch water circulation on command between an external heating circuit (15) and an internal sanitary hot water production circuit (16) and a bypass circuit arranged parallel to the external heating circuit and including a bypass valve (19) that when necessary opens to allow normal bypass flow and **characterized in that** the bypass circuit also includes a second valve (25) allowing passage in the bypass circuit of a flow directed oppositely to the normal bypass flow.

2. Boiler in accordance with claim 1 **characterized in that** the first valve includes a cutoff (21) that is thrust in closing by a spring (24) with a force preset to open under the desired thrust for the normal desired bypass flow and the second valve (25) is realized on said cutoff (21).

3. Boiler in accordance with claim 2 **characterized in that** the second valve includes a cutoff (26) arranged centrally to said cutoff (21) of the first valve to open a passage (28) in said cutoff of the first valve under the thrust of a flow directed oppositely to the opening flow of the first valve.

4. Boiler in accordance with claim 3 **characterized in that** the cutoff of the second valve (25) is realized with a ball (26) received in a seat (27) on the face of the cutoff (21) of the first valve towards the arrival side of the normal bypass flow with the ball (26) being free to run in the seat (27) axially to the cutoff (21) of the first valve between a position of closing of the passage (28) and an opposite position of opening of said passage (28).

5. Boiler in accordance with claim 4 **characterized in that** the cutoff (21) of the first valve has a stem (22) that extends axially thereto to run in a support (23) and said passage (28) extends for the entire stem (22) so as to open at one of its ends opposite the cutoff (21).

6. Boiler in accordance with claim 5 **characterized in that** the seat (27) is realized with elastic fingers (29) extending parallel and symmetrically around the running axis of the cutoff to terminate each one with a locking tooth (30) that cooperates with the other locking teeth (30) to form an end-of-travel stop for the ball (26) in the open position.

7. Boiler in accordance with claim 6 **characterized in that** the cutoff (21) of the first valve is in a single piece with the stem (28) and the elastic fingers (29).

8. Boiler in accordance with claim 1 **characterized in that** the switching means include a 3-way valve (14) arranged at the input of the heating and sanitary hot water production circuits.

9. Boiler in accordance with claim 1 **characterized in that** the sanitary hot water production circuit includes a secondary exchanger (16) that has a first branch traversed by the heated water flow from the primary exchanger and a second branch fed with mains water directed towards the users.
